# EUROPEAN PATENT APPLICATION

(11) **EP 1 775 663 A2**
(43) Date of publication of application: **18.04.2007**
(21) Application number: 06016206.2
(22) Date of filing: 03.08.2006
(51) Int. Cl.: G06F 17/30

(54) **Information management system and information display device**

(30) Priority: 11.10.2005 JP 2005296761
(71) Applicant: KABUSHIKI KAISHA TOSHIBA, Tokyo 105-8001 (JP)
(72) Inventor: Minamino, Noriko, Tokyo 105-8001 (JP); Murayama, Hiroshi, Tokyo 105-8001 (JP)
(74) Representative: HOFFMANN EITLE

(57) **Abstract**

An information management system includes a input unit configured to input a hierarchical dictionary in which a property is inherited from an upper class to a lower class and in which symbols representing the classes are defined;an creating unit that creates a list of symbols representing lower classes of a predetermined class by obtaining the symbols from the hierarchical dictionary, when the predetermined class is selected; and a display unit that displays a list of the symbols.

## Description

### CROSS-REFERENCE TO RELATED APPLICATIONS

This application is based upon and claims the benefit of priority from the prior Japanese Patent Application No. 2005-296761, filed on Oct. 11, 2005; the entire contents of which are incorporated herein by reference.

### BACKGROUND OF THE INVENTION

### 1. Field of the Invention

The present invention relates to an information management system and an information display device that are used for managing and displaying a hierarchical dictionary having a function for allowing lower classes to inherit properties of upper classes based on XML schema, Resource Description Framework (RDF), ISO13584/IEC61360 or ISO15926 standard.

### 2. Description of the Related Art

A hierarchical database, which is exemplified by an object-oriented database (OODB) and an object relational database (ORDB), has a hierarchical structure in which lower classes inherit properties of upper classes. In such a hierarchical database, the number of properties of the lower classes increases with successions from the upper classes. The successions of the properties of the upper classes to the lower classes are generally called "inheritance," the feature of which is described in many documents.

In the OODB, a unit of classification of one level is generally called a "class." On the other hand, in the ORDB, a table that permits the inheritance corresponds to the class in the OODB. Between the tables with a hierarchical relation, the properties are inherited from upper tables to lower tables, in other words, header information of a column constituting an upper table is inherited to a lower table. Data having the same type of property and belonging to a certain class of each level is called an "instance," and a collection thereof is called a "population." The population of data is usually stored in a structure called table in a relational database (RDB) or an ORDB. A string of properties making up a table is called a header of the table.

One known hierarchical database is defined by ISO13584 Parts Library Standard (hereinbelow simply referred to as "PLIB" standard), which is an international standard for implementing an electronic catalogue system which electronically providing product information. The "PLIB" standard is an international standard consisting of a plurality of "Parts" and defines a manner of object-oriented description of products library data or parts library data and a semantics for file exchange, in other words, defines what kind of terms, manner of description, and data type are to be employed. Part 42 (Part Issue No. 42) of the PLIB has same contents with the IEC61360-2 (Part Issue No. 2). The standard classifies products in an object-oriented manner, clarifies a group of properties characterizing each class, and realizes a file exchange of the contents corresponding to the class, and therefore, the concept of property inheritance is naturally incorporated herein. Further, since the standard is formulated based on the ISO6523 "Structure for Identification of organizations and organization parts," with the use of the International Code Designator (ICD) defined by ISO 6523, in particular, an internationally unique identifier can be allocated to each property.

In recent years, systems based on the PLIB standard are proposed, for example, in Japanese Patent Application Laid-Open No. 2004-177996, and Japanese Patent Application Laid-Open No. 2004-178015.

In the PLIB standard, classification and properties can define not only names (Preferred Name) and definition (Definition) which characterize the classification and the properties, but also drawings (Simplified Drawing), which represent the characteristics of the classification and the properties, and icons (Named Icon) added to the names. They characterize the classification and the properties similarly to the names and the definition, but in standard dictionary or the like which is used mostly in multilingual environment, what is indicated by classification and properties can be roughly discriminated visually even when translated names and definition are not provided.

The conventional PLIB database, however, adopts a system in which a hierarchy is represented by a tree structure like a drawing, and when a desired classification or a property is selected, a symbol (drawing or icon) is displayed as detailed information. Since the lower classes are not displayed as a list in this system, the user cannot obtain a broad picture of lower classification, and hence the system fails to help users to track down the hierarchy.

### SUMMARY OF THE INVENTION

According to one aspect of the present invention, an information management system, includes a input unit configured to input a hierarchical dictionary in which a property is inherited from an upper class to a lower class and in which symbols representing the classes are defined;an creating unit that creates a list of symbols representing lower classes of a predetermined class by obtaining the symbols from the hierarchical dictionary, when the predetermined class is selected; and a display unit that displays a list of the symbols..

According to another aspect of the present invention, an information display device includes a input unit configured to input a hierarchical dictionary in which a property is inherited from an upper class to a lower class and in which symbols representing the classes are defined; an creating unit that creates a list of symbols representing lower classes of a predetermined class by obtaining the symbols from the hierarchical dictionary, when the predetermined class is selected; and a display unit that displays a list of the symbols.

### BRIEF DESCRIPTION OF THE DRAWINGS

FIG. 1 is an explanatory diagram showing one example of a configuration of a hierarchical dictionary which is a basis for an embodiment;
FIG. 2 is an explanatory diagram showing one example of a configuration of the hierarchical dictionary based on a PLIB standard using a simple tree;
FIG. 3 is an explanatory diagram showing one example of a class configuration and a dictionary correcting rule thereof;
FIG. 4 is an explanatory diagram showing one example of a property configuration and a dictionary correcting rule thereof;
FIG. 5 is an explanatory diagram showing one example of attribute configurations of the classes and the properties;
FIG. 6 is a schematic diagram showing an example of a structure of a system of an information management system according to one embodiment of the present invention;
FIG. 7 is a diagram of a module structure showing a server and a client terminal;
FIG. 8 is a block diagram showing a schematic configuration of an information management system;
FIG. 9 is a flowchart schematically showing a flow of a process in a dictionary input processing unit of the server;
FIG. 10 is an explanatory diagram showing a dictionary with a hierarchical structure as an example;
FIG. 11 is an explanatory diagram showing drawings which are defined in a class as an example;
FIG. 12 is a flowchart schematically showing a flow of a process in a dictionary display unit of the server;
FIG. 13 is a flowchart schematically showing a flow of a process in a setting unit;
FIG. 14 is a flowchart schematically showing a flow of a process in the dictionary display unit of the client terminal;
FIG. 15 is a front view showing a palette example of a class "C003: computer" in dictionary data displayed on the display unit of the client terminal;
FIG. 16 is a front view showing an example of classification information for confirmation displayed on the display unit of the client terminal;
FIG. 17 is a front view showing one example of a contents display screen displayed on the display unit of the client terminal;
FIG. 18 is a front view showing one example of a contents or view creating screen displayed on the display unit of the client terminal;
FIG. 19 is a front view showing one example of class information displayed on the display unit of the client terminal;
FIG. 20 is a front view showing one example of supplier information displayed on the display unit of the client terminal;
FIG. 21 is a front view showing one example of dictionary information displayed on the display unit of the client terminal;
FIG. 22 is a front view showing an example of lower class classification for confirmation displayed on the display unit of the client terminal;
FIG. 23 is a front view showing an example of a reference class for confirmation displayed on the display unit of the client terminal;
FIG. 24 is a front view showing a display example of lowest class classification displayed on the display unit of the client terminal;
FIG. 25 is a front view showing an example of display according to class type corresponding to icons for class selection;
FIG. 26 is a front view showing a modification of the palette of the class "C003: computer" in the dictionary data displayed on the display unit of the client terminal; and
FIG. 27 is a block diagram showing a modification of a schematic configuration of the information management system.

### DETAILED DESCRIPTION OF THE INVENTION

An embodiment of an information management system and an information display device according to the present invention are described in detail below with reference to the accompanying drawings.

### 1. Hierarchical Dictionary

A hierarchical dictionary employed in an electronic catalogue system that electronically provides product information will be first described. The hierarchical dictionary is a basis for the embodiment.

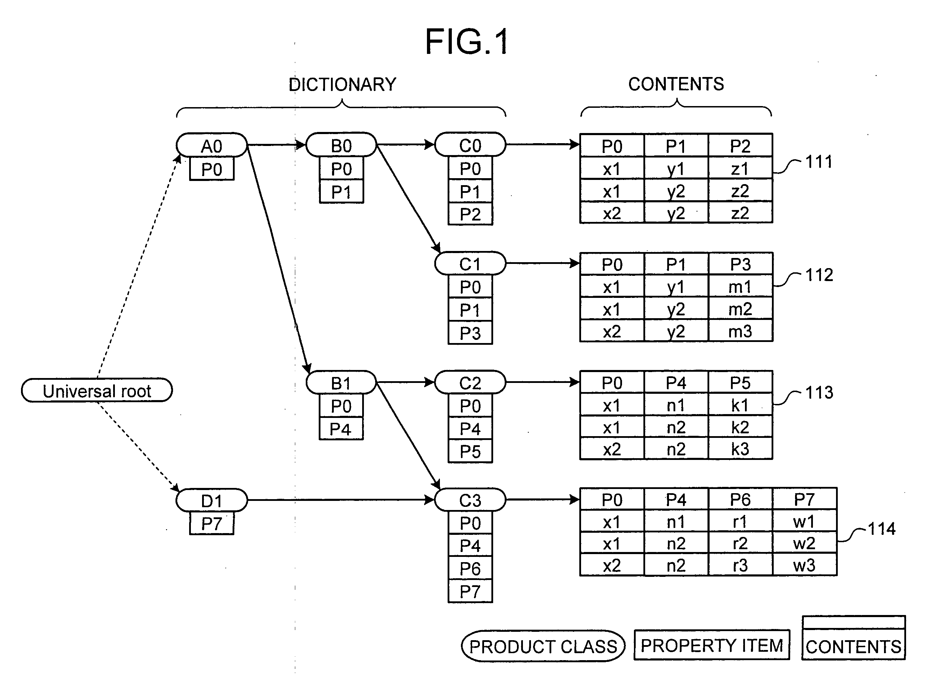

FIG. 1 shows one example of a structure of a hierarchical dictionary. The hierarchical dictionary shown in FIG. 1 is a hierarchical database divided into plural levels. Each level has one or more classification items, and lower levels inherit properties of upper levels. Hence, the properties of the classification items in a lower level succeed the properties of the classification items in an upper level. Here, each of the hierarchical classification items is called class, and each class has its own properties. The hierarchical dictionary shown in FIG. 1 indicates a general inter-class property inheriting relation including a multiple inheritance. The classes are represented by A0, B0, B1, C0, C1, C2, C3, and D1, whereas the properties are represented by P0 to P7. The class C3 inherits the properties P0 and P4 from the parent class B1, while inheriting the property P7 from another parent class D1. The property P6 is uniquely defined in the class C3. The class A0 and the class D1 are independent classes. A universal root is an overarching class which hypothetically includes all root classes. The universal root may correspond to what is generally called a "universal set" in mathematics. Since the overarching class has no unique property and no property to be inherited, the overarching class can be treated as a parent class of any root class.

PLIB standard (ISO13584 Parts Library), which is an international standard for implementing an electronic catalogue system that electronically provides product information, employs a simple tree structure as a hierarchical structure for classification of products and properties thereof. Hence, there is only one upper class (parent class). When the property of class other than the parent class is to be inherited, a special structure is employed for an import (citation) of a property called "Case Of." This structure can be regarded as a modified version of the multiple inheritance of FIG. 1, in other words, a structure in which a tree is divided into a main line and a sub-line, the main line being formed from a parent class with a smallest number and the sub-line being given an alternate name "Case Of." In the ORDB or a general object-oriented database, not all the tables and classes have a parent table or a parent class. However, the table and the class which exists independently can be connected to a hypothetical "universal root" as shown in FIG. 1, so that all classes can be traced back to a single root, the feature of which can be similarly found in the simple tree structure.

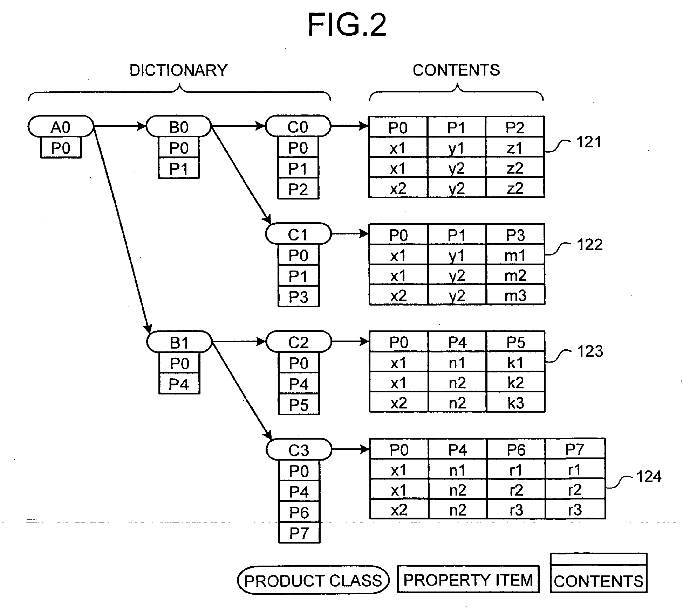

FIG. 2 shows an example of a structure of a hierarchical dictionary employing a simple tree structure based on the PLIB standard. The hierarchical dictionary shown in FIG. 2 based on the PLIB standard does not have a universal root. In FIG. 2, a portion including A0, B0, B1, C0, C1, C2, and C3 of the tree structure represents information including classification levels. In the embodiment, the tree is a simple tree, and the class has only one upper class.

In FIG. 2, the class A0 has lower classes B0 and B1. The class B0 has lower classes C0 and C1, whereas the class B1 has lower classes C2 and C3. Each product class has a property item and the property of an upper class is inherited to a lower class. In FIG. 2, contents 121, 122, 123, and 124 are actual product data. For example, the content 121 is product data of the C0. The content 121 includes content data of three types. More specifically, the content 121 includes property values x1 and x2 of a property item P0, property values y1 and y2 of a property item P1, and property values z1 and z2 of a property item P2.

The contents 111 to 114 of FIG. 1 have similar characteristics with contents 121 to 124 of FIG. 2.

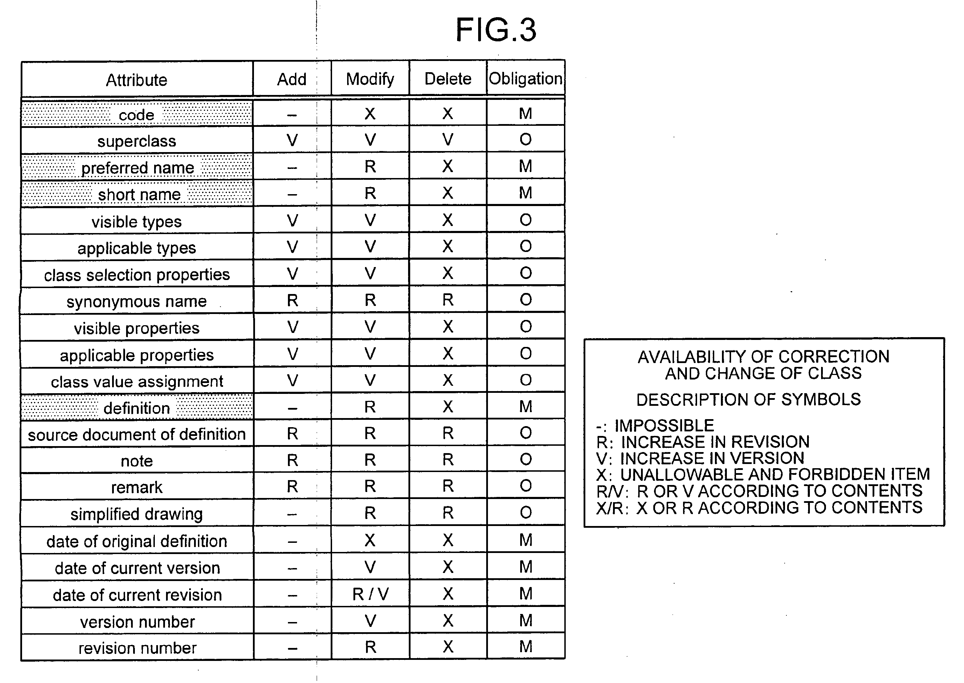

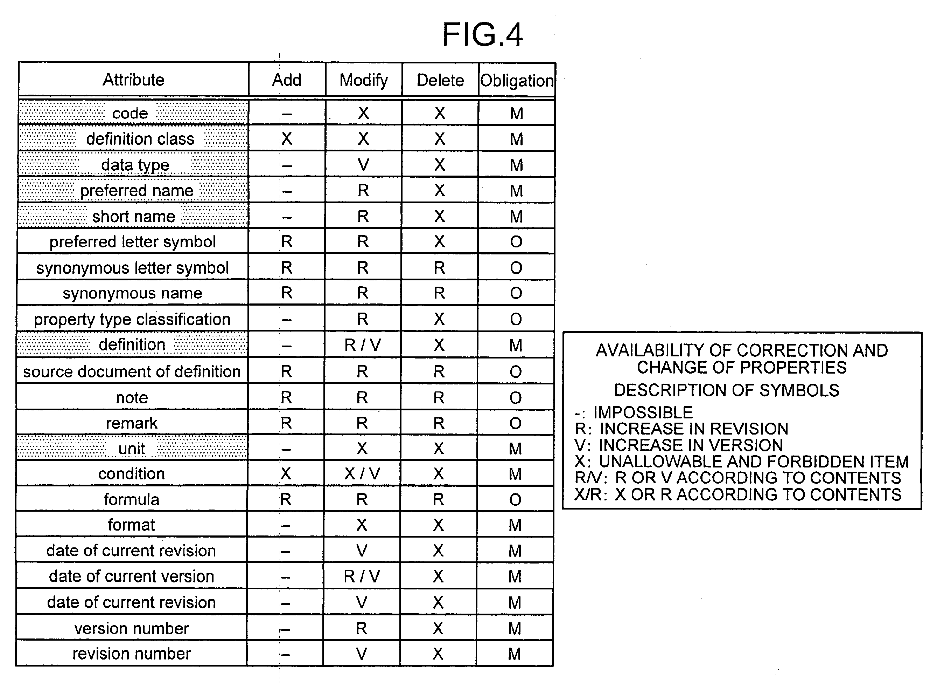

The class and the property of the dictionary are defined by respective attributes. Here, "attribute" means an information field employed to define detailed information of each class and property. To avoid confusion between the "property" of the class and the "attribute," the detailed information fields of the class and the property will be referred to as the "attribute" in the description. For each class, as shown in FIG. 3, attributes such as a class type (class type), a class name (code), a parent class (superclass), a standard name (preferred name), a drawing showing characteristics of the classification and the property (simplified drawing), and an icon attached to a name (named icon) not shown, are defined. For a property, as shown in FIG. 4, attributes such as a property code (code), a definition class (definition class), a data type (data type), and a standard name (preferred name) are defined.

The attributes define the class and the property based on the PLIB definition thereby determining a format of the content, whether the content can be edited or not (as indicated by "Add," "Modify," and "Delete" in FIGS. 3 and 4), whether the content is mandatory or optional (as indicated by "Obligation" in FIGS. 3 and 4), or the like.

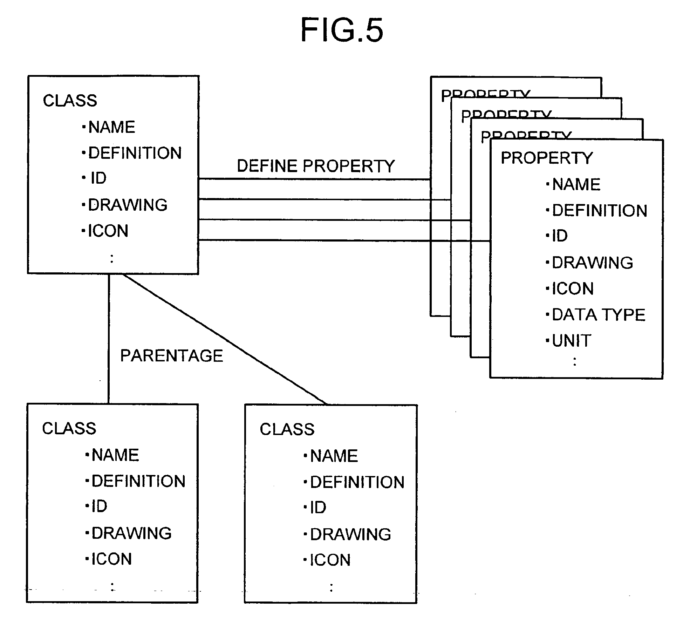

That is, in this embodiment, as shown in FIG. 5, in each class, attributes, such as a class name, class definition, a class ID, a drawing showing the characteristics of the classification and property (simplified drawing), and an icon attached to a name (named icon), can be defined. On the other hand, in each property, as shown in FIG. 5, attributes, such as a class name, class definition, a class ID, a data type, a unit, a drawing showing the characteristics of the classification and the property (simplified drawing), and an icon attached to a name (named icon), can be defined. In this embodiment, a drawing and an icon defined as attributes are called as a symbol representing a class in the hierarchical dictionary.

### 2. System Structure

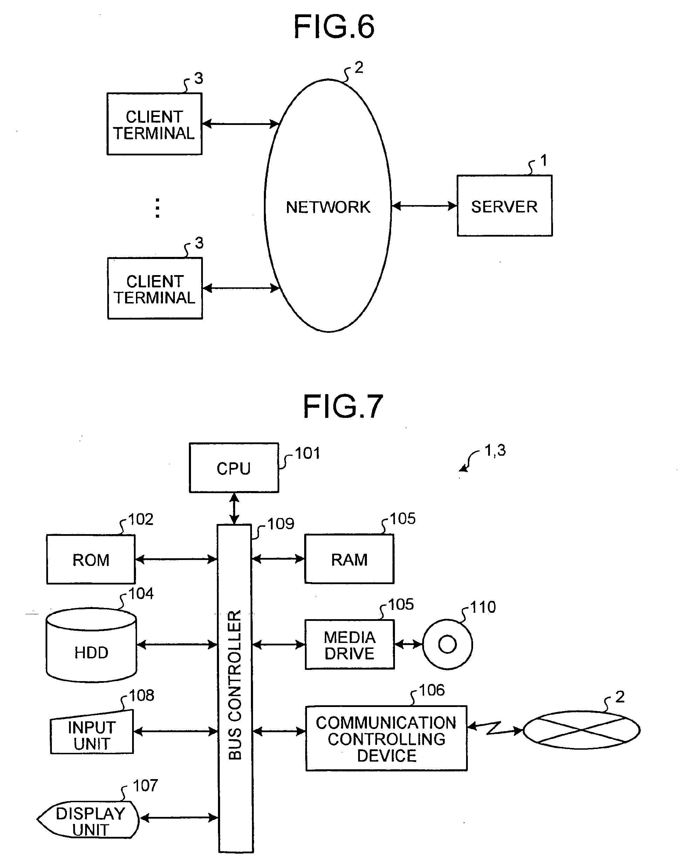

One embodiment of the present invention will be described in detail. FIG. 6 is a schematic diagram of an example of a structure of a system of an information management system according to the embodiment. The system, as shown in FIG. 6, is assumed to be a server-client system where a server computer 1 (hereinafter simply referred to as a server) which is an information management device, is connected to plural client computers 3 (hereinafter simply referred to as client terminals) which are information display devices via a network 2 such as a Local Area Network (LAN) .

FIG. 7 is a diagram showing a module structure of the server 1 and the client terminal 3. The server 1 and the client terminal 3 are, for example, a general personal computer.

Each of the server 1 and the client terminal 3 includes a central processing unit (CPU) 101 which performs information processing, a read only memory (ROM) 102 which stores BIOS or the like and is a dedicated memory for reading out, a random access memory (RAM) 103 which rewritably stores various data, a hard disk drive (HDD) 104 which functions as various databases and stores various programs, a media drive 105, such as a CD-ROM drive, which serves to store information, externally distribute information, and externally acquire information, using a storing medium 110, a communication controlling device 106 that serves to transmit information to/from other external computer via the network 2, a display unit 107 such as a cathode ray tube (CRT), or a liquid crystal display (LCD) which displays condition of processing and results of processing to an operator, and an input unit 108, such as a keyboard or a mouse, which serves to receive input such as a command or information from the operator to supply the same to the CPU 101, and the data transmitted among the respective units are arbitrated by a bus controller 109.

When the power of the server 1 and the client terminal 3 is turned on by the user, the CPU 101 starts up a program called loader inside the ROM 102, to read out an operating system (OS) which is a program for managing a hardware and a software of the computer from the HDD 104 to the RAM 103, and starts up the OS. The OS serves to activate a program, read in information, and store information according to a manipulation by the user. Known typical OS are, for example, Windows (registered trademark), and UNIX (registered trademark). A program running on the OS is called an application program. The application program is not limited to those running on a predetermined OS and may be a program that let the OS execute a part of various processing described later. Still alternatively, the application program may be included in a group of program files making up a predetermined application software or an OS.

Here, the server 1 stores the information management program in the HDD 104 as an application program. In this sense, the HDD 104 functions as a storing medium that stores the information management program.

On the other hand, the client terminal 3 stores an information display program in the HDD 104 as an application program. In this sense, the HDD 104 functions as a storing medium that stores the information display program.

An application program installed in the HDD 104 of the server 1 and the client terminal 3 is generally recorded in the storing medium 110 such as an optical disk such as a CD-ROM, or a DVD, various magnetooptical disk, various magnetic disk such as a flexible disk, a media of various recording schemes such as a semiconductor memory; and the program stored in the storing medium 110 is installed into the HDD 104. Here, a portable storing medium 110 such as an optical information recording medium such as a CD-ROM, or a magnetic media such as an FD can be employed as a storing medium that stores an application program. Further, the application program may be taken in from outside via the communication controlling device 106, for example, and installed into the HDD 104.

When the information management program running on the OS is started up, the server 1 follows the information management program, and the CPU 101 executes various operations to collectively control the respective units. On the other hand, when the information display program running on the OS is started up, the client terminal 3 follows the information display program, and the CPU 101 executes various operations to collectively control the respective units. Characteristic operations in this embodiment included in the various operations to be executed by the CPU 101 of the server 1 and the client terminal 3 are explained below.

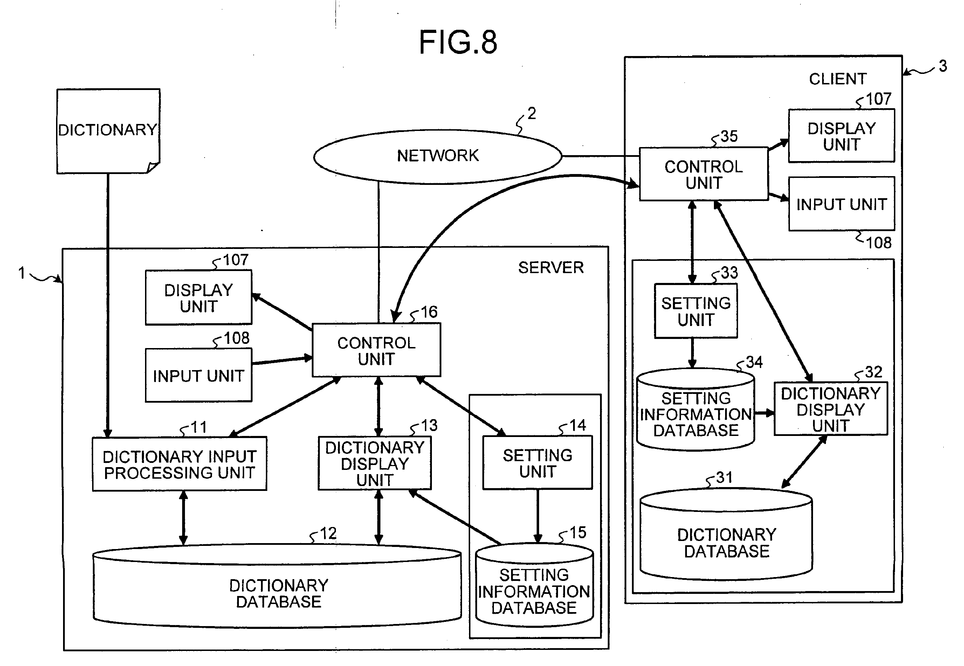

FIG. 8 is a block diagram showing a schematic structure of the server 1 and the client terminal 3. As shown in FIG. 8, the server 1 follows the information management program, and includes a dictionary input processing unit 11, a dictionary database 12, a dictionary display unit 13, a setting unit 14, a setting information database 15, and a control unit 16. The dictionary database 12 and the setting information database 15 are stored in a RAM 103 or an HDD 104 as a storage unit. On the other hand, the client terminal 3 follows the information display program, and includes a dictionary database 31, a dictionary display unit 32, a setting unit 33, a setting information database 34, and a control unit 35. Respective functions in the server 1 and the client terminal 3 are explained below.

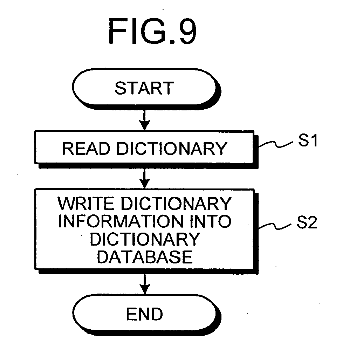

In the dictionary input processing unit 11 of the server 1, as shown in the flowchart of FIG. 9, when dictionary information is supplied, information about drawings and icons in the dictionary information are read (step S1), and the information as well as dictionary information about classification names and definitions is stored in the dictionary database 12 (step S2).

Information about drawings and icons defined by the product classification and property as well as hierarchical structure, information about respective product types, and information about properties are described in the dictionary information to be stored in the dictionary database 12. The image files of the drawings and the icons may be referred to from the dictionary, or they may be described as binary information in the dictionary. When the information about drawings and icons is described as external Uniform Resource Locator (URL), or when the image file of drawings and icons is placed in the server 1, a name, a type, an MIME type, an access protocol, and the like of the file are described.

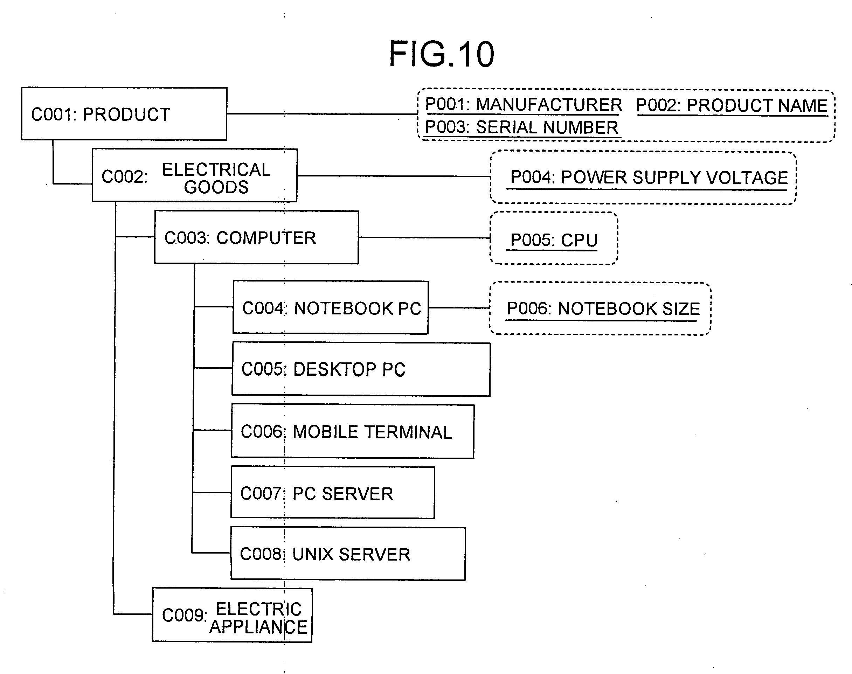

FIG. 10 shows an example of the dictionary having the hierarchical structure. Squares shown by solid lines are classes, ovals shown by broken lines are properties defined in the classes. For example, in the class "C001: product", three properties "P001: manufacturer", "P002: product name" and "P003: serial number" are defined. Since the properties are inherited by lower classes, in "C002: electrical goods" as one lower class, four properties in total can be utilized because the above-mentioned three properties as well as a property "P004: power supply voltage" defined in C002 are inherited.

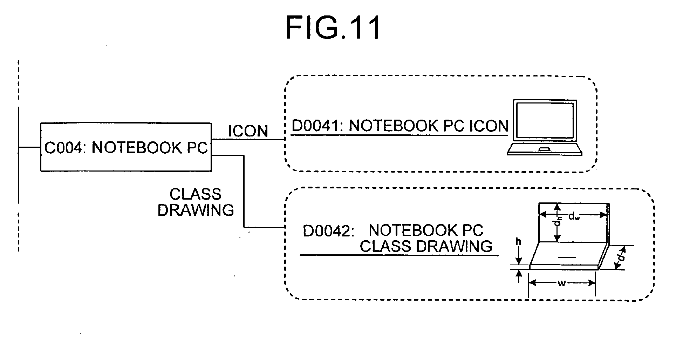

FIG. 11 shows drawings defined for the class as an example. In PLIB, a class drawing showing a schematic diagram of the classes and an icon which symbolically shows a name are defined as two symbols. FIG. 11 shows an example where two symbols, i.e., an icon and a drawing "D0041: notebook PC icon" and "D0042: notebook PC class drawing" are defined for the class "C004: notebook PC". Similarly, in the other classes, two symbols, i.e., a drawing and an icon are defined. Since they are defined optionally, however, the drawing and the icon are not actually allocated.

When a request for display of dictionary is input from a user via the input unit 108 and the control unit 35 of the client terminal 3 into the control unit 16 of the server 1, the control unit 16 of the server 1 transmits the request to the dictionary display unit 13.

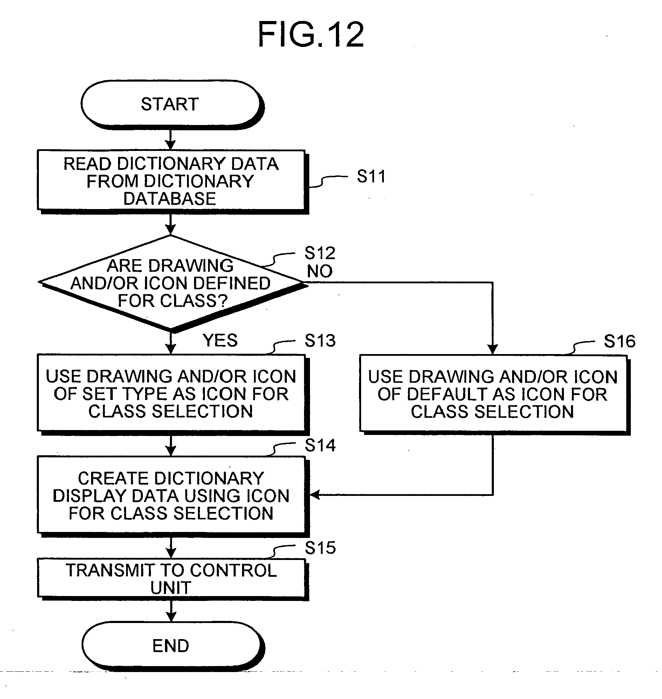

The dictionary display unit 13 of the server 1 which receives the request for display of the dictionary reads dictionary information from the dictionary database 12 as shown in the flowchart of FIG. 12 (step S11). When a drawing and/or an icon are defined for the class (Yes in step S12), the drawing and/or the icon of the set type are used as an icon for class selection (step S13), and dictionary display data is created with the icon for class selection (list-display-control information) (step S14) and transmitted to the control unit 16 of the server 1 (step S15). On the other hand, when the drawing and/or the icon are not defined for the class (No in step S12), a drawing and/or an icon set as defaults are used as the icon for class selection (step S16), and dictionary display data is created with the icon for class selection (list-display-control information) (step S14). Thus, the dictionary display unit 13 handles every piece of dictionary information.

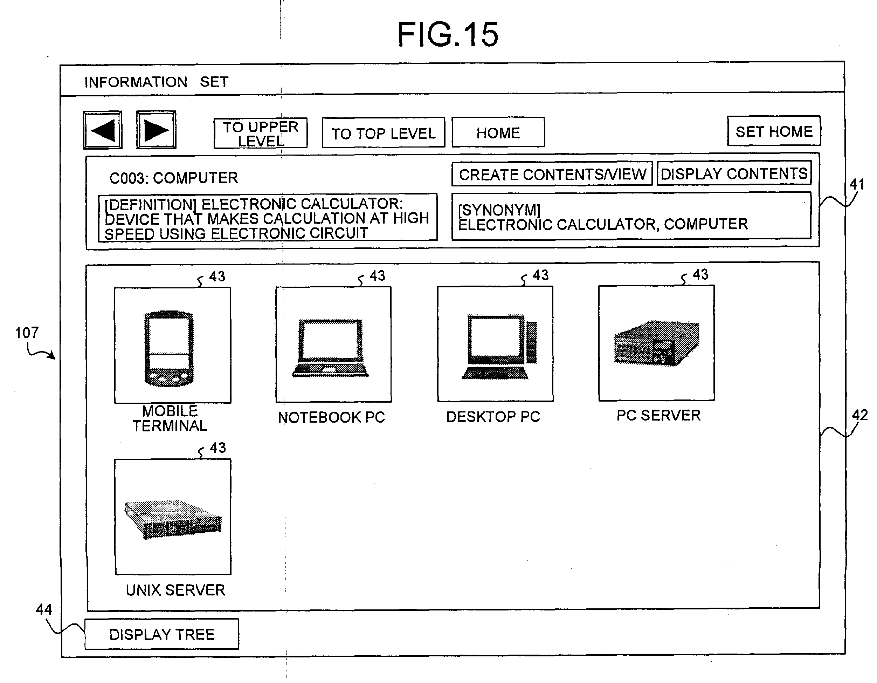

When the control unit 16 of the server 1 receives the dictionary display data (list-display-control information) from the dictionary display unit 13, it transmits the dictionary display data to the client terminal 3. When the control unit 35 of the client terminal 3 receives the dictionary display data (list-display-control information) from the server 1, the dictionary display data (list-display-control information) is displayed as a palette on the display unit 107 so as to be presented to the user (for example, see FIG. 15, mentioned later).

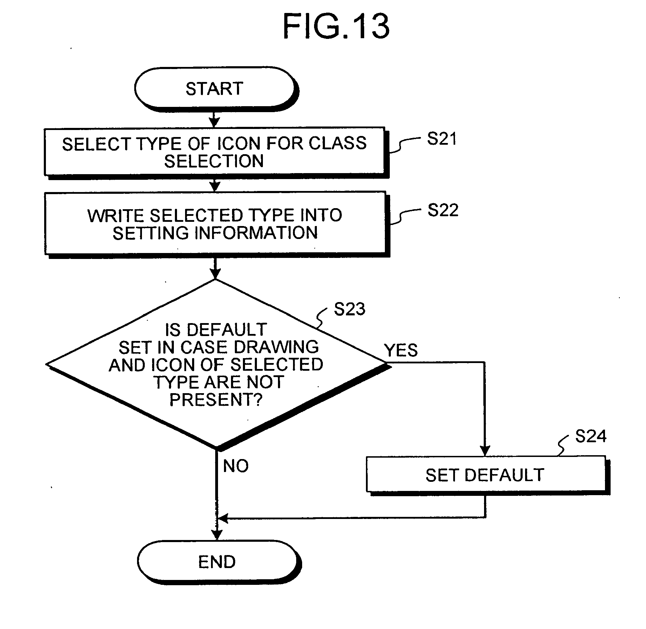

The setting unit 14 of the server 1 (the setting unit 33 of the client terminal 3) has a function for setting what process to be executed in the setting information database 15 when plural types of drawings and icons are present or when no drawing or icon are present in the dictionary for the product classification. More specifically, as shown in the flowchart of FIG. 13, when a type of the icon for class selection is selected by the user via the input unit 108 and the control unit 35 (step S21), the selected type is written into the setting information database 15 (step S22), and a determination is made whether a default is set when a drawing or an icon of the selected type are not present (step S23).

When the determination is made that the default is to be set in case a drawing and/or an icon of the selected type are not present (Yes in step S23), the default is set (step S24), and when the determination is made that the default is not to be set in case a drawing and/or an icon of the selected type are not present (No in step S23), the process is ended.

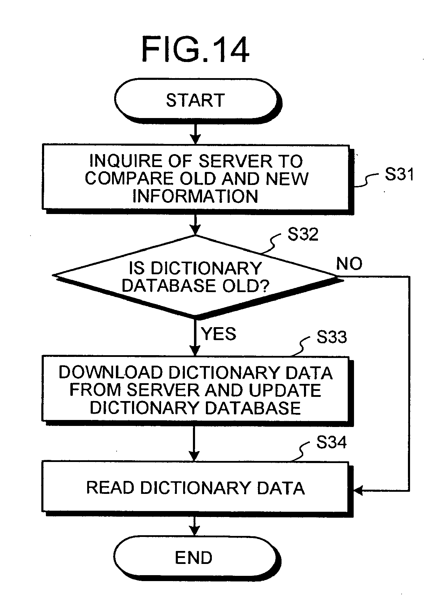

In the embodiment, the client terminal 3 saves some or all parts of the dictionary database 12 of the server 1 in a local (dictionary database 31), so that the processing speed can be heightened. Specifically, as shown in the flowchart of FIG. 14, when the user requests display of the dictionary via the input unit 108, the dictionary display unit 32 of the client terminal 3 inquires of the dictionary display unit 13 via the control unit 16 of the server 1 about a version of the dictionary (or a version of the class) stored in the dictionary database 31 of the client terminal 3. The versions of the dictionary databases are compared (step S31), and when the dictionary database 31 of the client terminal 3 is old (Yes in step S32), dictionary data are downloaded in project unit, dictionary unit, or classification unit. Each unit contains one or a plurality of dictionaries. Thus, the dictionary database 31 is updated (step S33). In the case of PLIB, for example, a date of dictionary updating, a class upgrading date and the like can be utilized as standard for comparison. The dictionary display unit 32 of the client terminal 3 which receives the request for the display of dictionary reads dictionary information from the dictionary database 31 (step S34). As a result, the processing speed can be heightened.

FIG. 15 shows an example of a palette for the class "C003: computer" in the dictionary data to be displayed on the display unit 107 of the client terminal 3. As the palette, lower classification is displayed in a list format using drawings and icons. Class information about "C003: computer" and a lower class of "C003: computer" are displayed in an upper part 41 and in a lower part 42, respectively, with icons for class selection 43. The icons for class selection 43 are specified in advance for each dictionary or each class by a user, a dictionary, or a system, via the setting unit 14 of the server 1 (or the setting unit 33 of the client terminal 3) from the drawings and the icons determined in the dictionary. Such display enables the user to understand what class is the lower class from a cursory inspection. The user can move to a palette of a still lower class by double-clicking the still lower class shown on the palette with the input unit 108 such as a mouse. Further, the palette can be switched into a conventional tree display screen (see Japanese Patent Application Laid-Open No. 2004-178015) with a push-down of a switching button 44 by the input unit 108 such as the mouse.

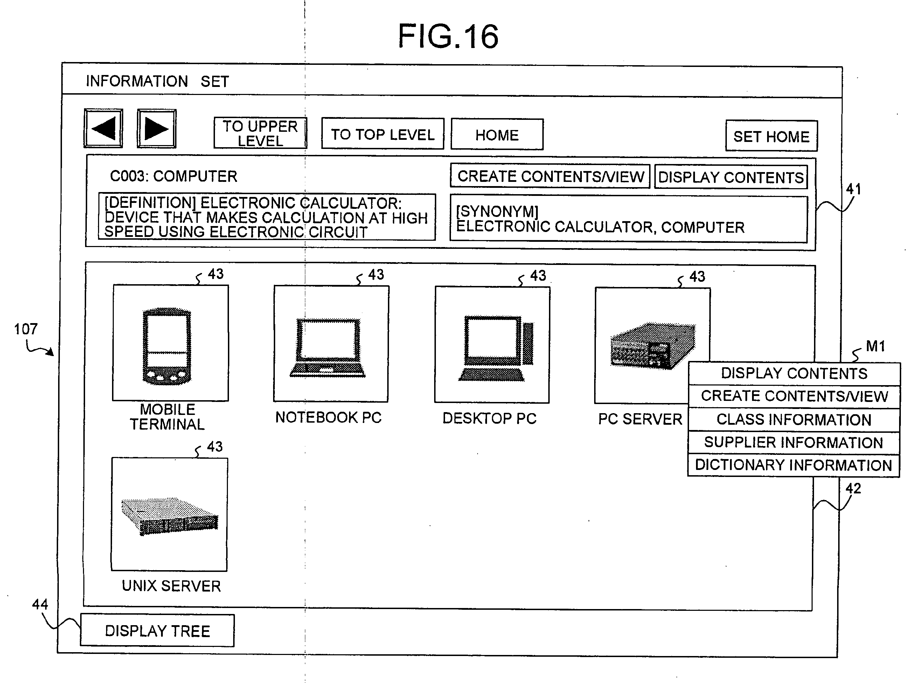

As shown in FIG. 16, for example, when the icon for class selection 43 of the lower class on the palette is selected by right clicking of the input unit 108 such as the mouse, a menu M1 where manipulations on the class, namely, information display, creation of contents, and display of contents can be performed is displayed as a list of manipulations for a class. Some of the manipulations on the class do not have to be selected from the menu M1 and may be directly actuated by operating the input unit 108 such as the keyboard or the mouse that functions as a selecting unit. For example, the icon for class selection 43 is selected by right clicking of the input unit 108 such as the mouse, so that the contents of the class represented by the icon for class selection 43 can be displayed.

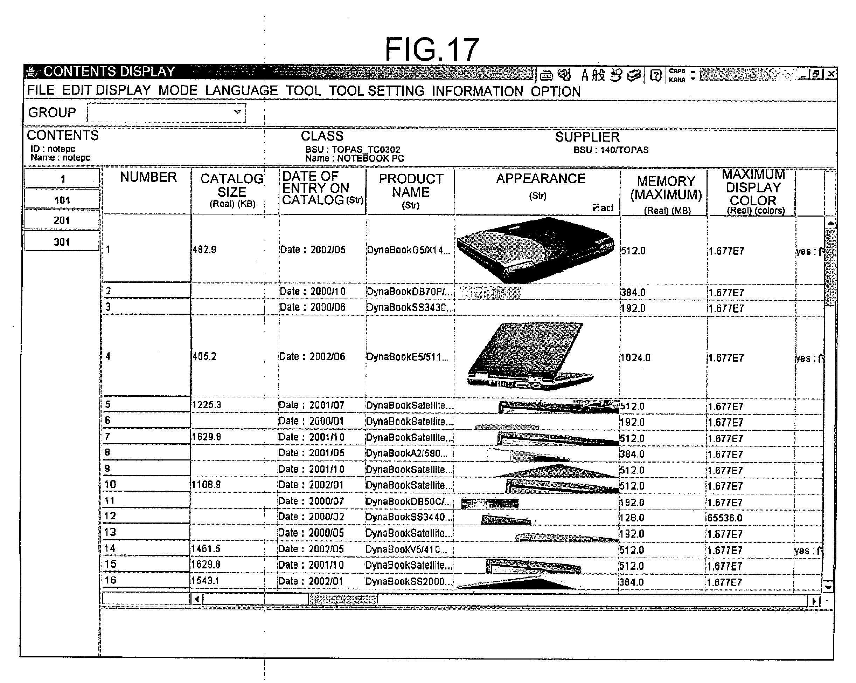

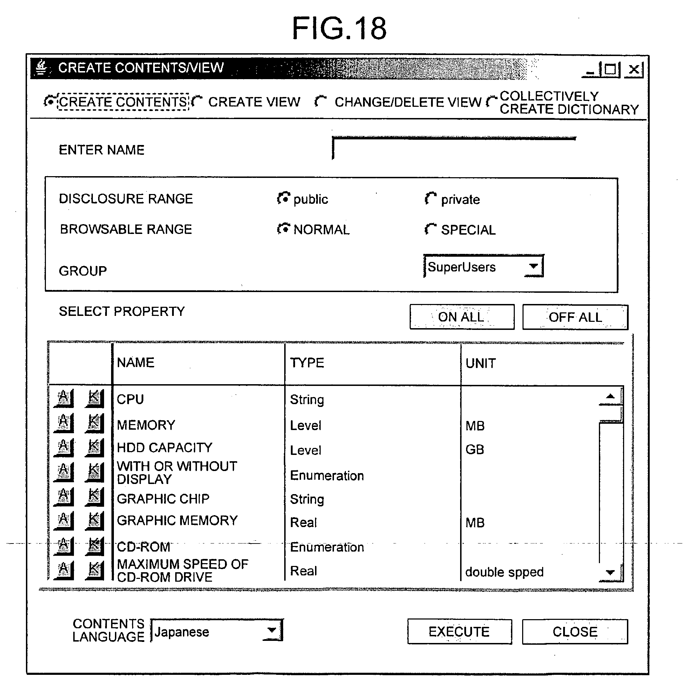

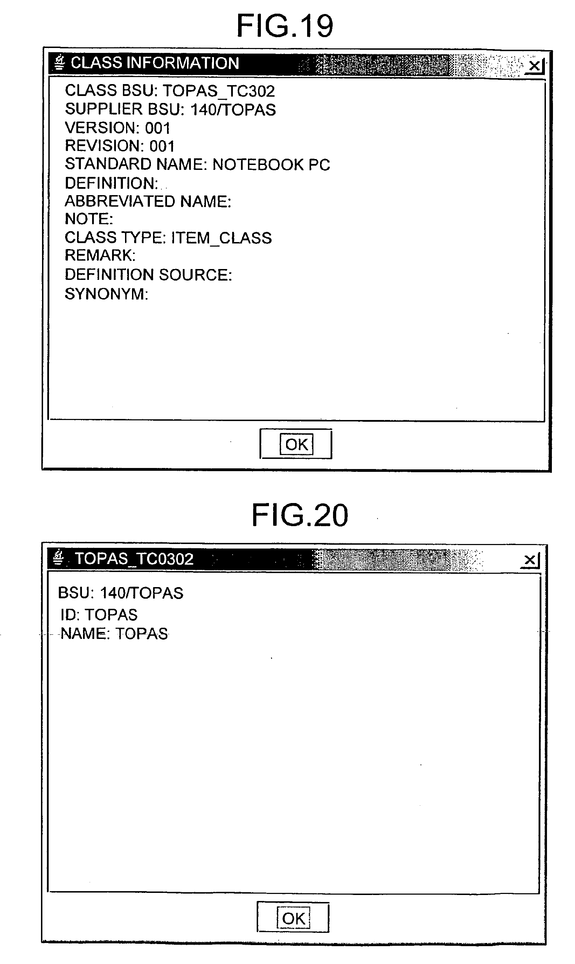

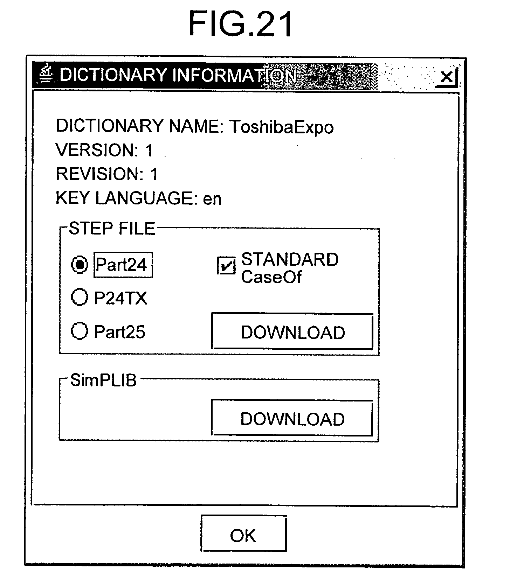

For example, when "display contents" is selected from the menu M1, a contents display screen as shown in FIG. 17 is displayed. When "create contents/view" is selected from the menu M1, a contents or view creation screen as shown in FIG. 18 is displayed. When "class information" is selected from the menu M1, class information as shown in FIG. 19 is displayed. When "supplier information" is selected from the menu M1, supplier information as shown in FIG. 20 is displayed. When "dictionary information" is selected from the menu M1, dictionary information as shown in FIG. 21 is displayed.

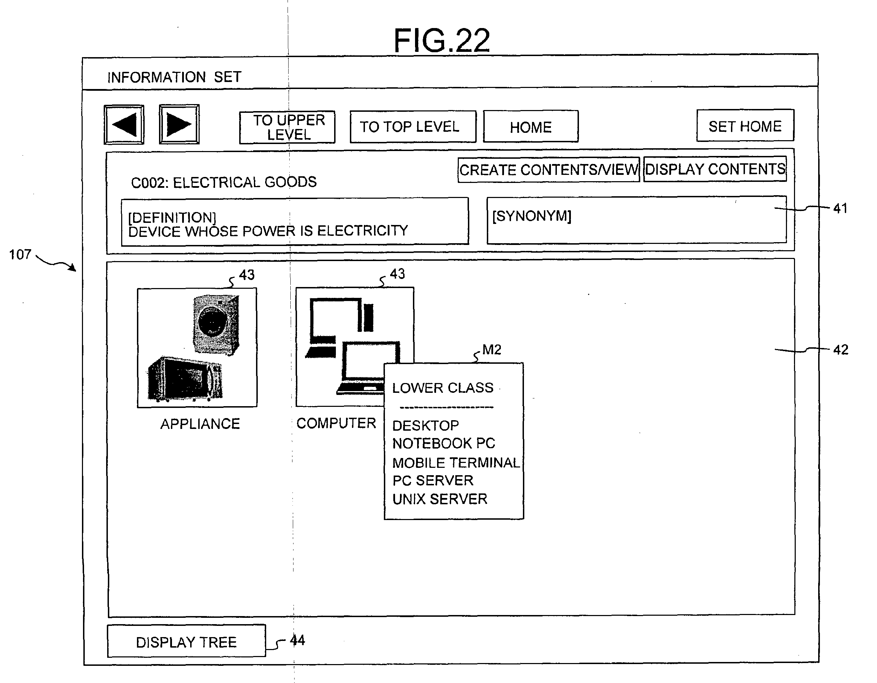

As shown in FIG. 22, a tree display menu M2 which displays a list of names and identifiers of the lower class can be combined with the icons for class selection 43. For example, when a pointer points at a vicinity of the icon for class selection 43 of the lower class in the lower class frame according to the input from the input unit 108, such as the mouse, names, identifiers, or class drawings are displayed in a row as the lower class. As a result, the user can understand what class is present in the lower level without actually clicking the icon for class selection 43 for the display.

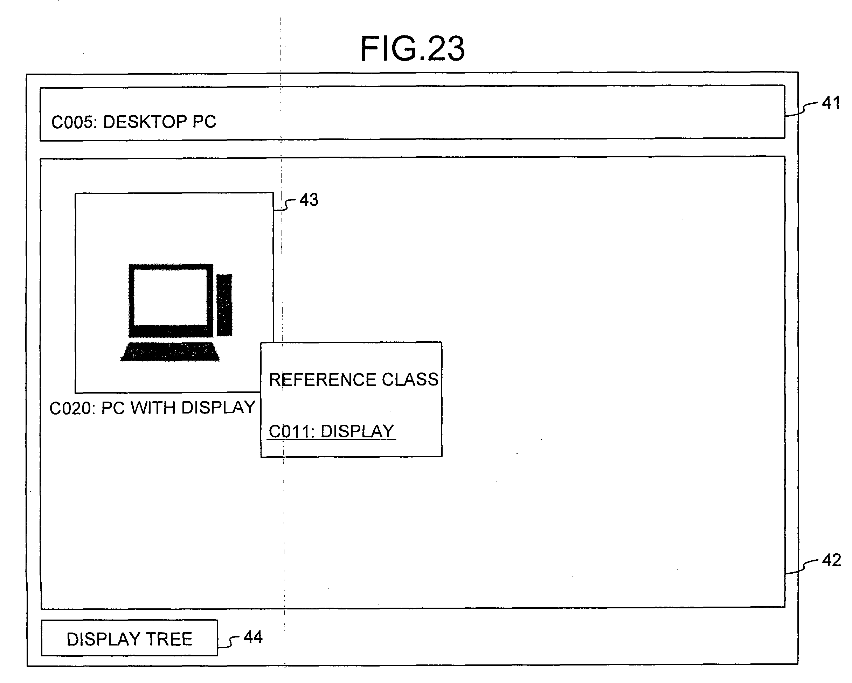

As shown in FIG. 23, when the icon for class selection 43 (C020: PC with display) is selected by right clicking of the input unit 108 such as the mouse, the display may jump to the class from which the property (C011: display) is imported so that the contents thereof are displayed.

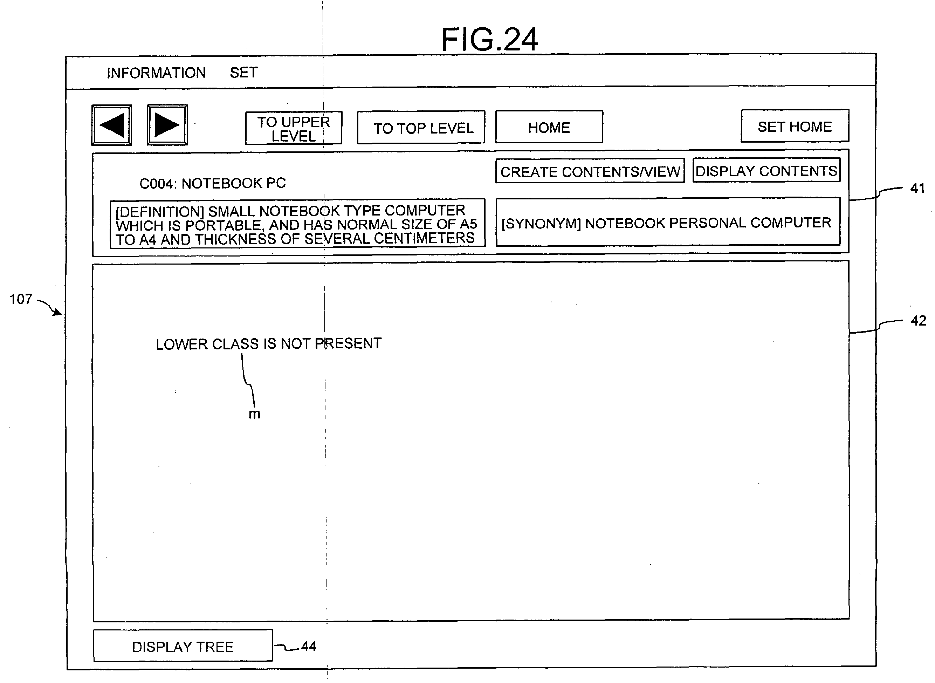

In the palette, only a hierarchical structure is described, and a content table of the class is expressed separately from the hierarchical structure. When a class does not have a lower class which should be displayed on the lower class frame in the palette, as in the case of the lowest class such as the class "C004: notebook PC", namely, in the case of a leaf class, as shown in FIG. 24 for example, absence of the lower class may be clearly indicated on the lower part 42 by a message "m" such as "LOWER CLASS IS NOT PRESENT". A way to indicate the absence of lower class is not limited thereto, and the lower part 42 may be left blank.

Plural types of classes are present in PLIB. Specifically, these classes include "ITEM_CLASS" representing a normal class, "FEATURE_CLASS" for describing a condition and a function, "ITEM_CLASS_CASE_OF" for referring to the other classes and importing properties, and the like. Since the classes are treated differently according to the types, clear indication of the types is meaningful.

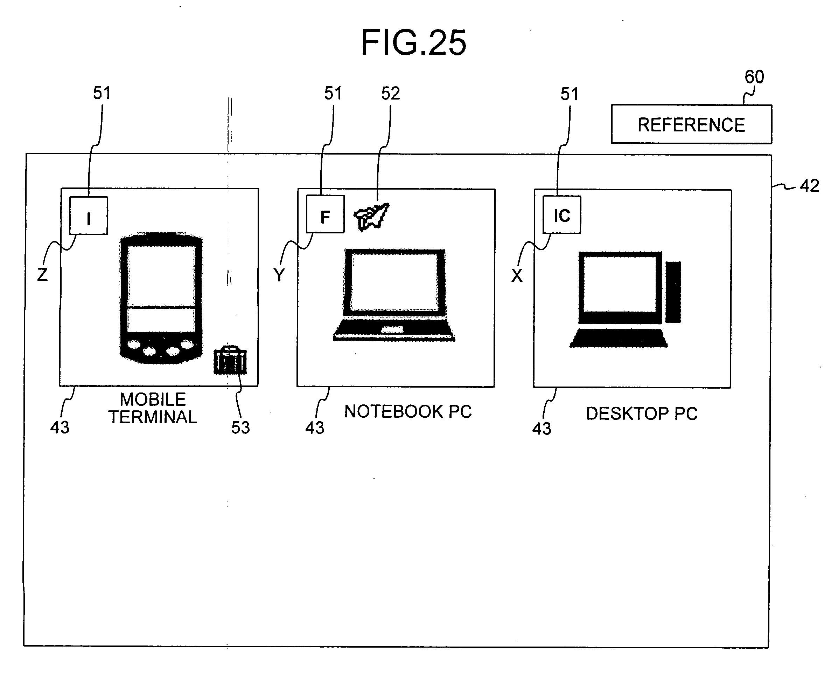

In this embodiment, in the dictionary display unit 13 (dictionary display unit 32), the icons for class selection 43 are displayed according to the class types. FIG. 25 shows an example of the display of the icons for class selection 43 according to the types. In the example of FIG. 25, the reference numeral 51 represents a class type on the icon for class selection 43 on the palette. The icon for class selection 43 on which an IC mark X is displayed is the normal class "ITEM_CLASS", and the icon for class selection 43 on which an F mark Y is displayed is the class "FEATURE_CLASS" for describing a condition and a function. The icon for class selection 43 on which an I mark Z is displayed is the class "ITEM_CLASS__CASE_OF" for referring to the other classes and importing properties.

PLIB has, in addition to the function of direct inheritance of properties from parent classes, the function of importing properties from other class and of using the imported properties in its class. This is called "CASE OF" function. The IC mark X representing "ITEM_CLASS_CASE_OF" is added to such a class having a CASE-OF relationship. The IC mark X represents that the class has the CASE-OF relationship. In this embodiment, when an icon 52 like a paper airplane in FIG. 25 is added to the icon for class selection 43, it means that this class is a class which is referred to by other class. Such a display is provided according to a request which demands simultaneous display of the CASE-OF relationship (for example, in response to the push-down of a button 60 in FIG. 25 via the input unit 108 such as the mouse). With the display of the icon 52 such as the paper airplane, it can be explicitly shown that the pertinent class is a virtual class and the substance thereof exists separately. When the icon 52 such as the paper airplane displayed virtually is selected by the input unit 108 such as the mouse, the display may jump to the class with substance, so that the contents thereof may be displayed. The display of the class with substance can be viewed simultaneously with the virtual class by activating another browser or the like. The request for the display of CASE OF does not have to be made by push-down of a button in an explicit manner, and may be made by default display according to the system setting.

In this embodiment, when an icon 53 such as a bag in FIG. 25 is added to the icon for class selection 43, it can be known that content data are registered for the class.

According to the embodiment, when a predetermined class is selected through the selection of a symbol, which is defined as representing the selected class by the dictionary, the lower classes of the selected class are shown as a list. Hence, it can be easily known what kind of lower classes are present. Further, the user can move from one level to another in the hierarchy by selecting the symbol included in the displayed list.

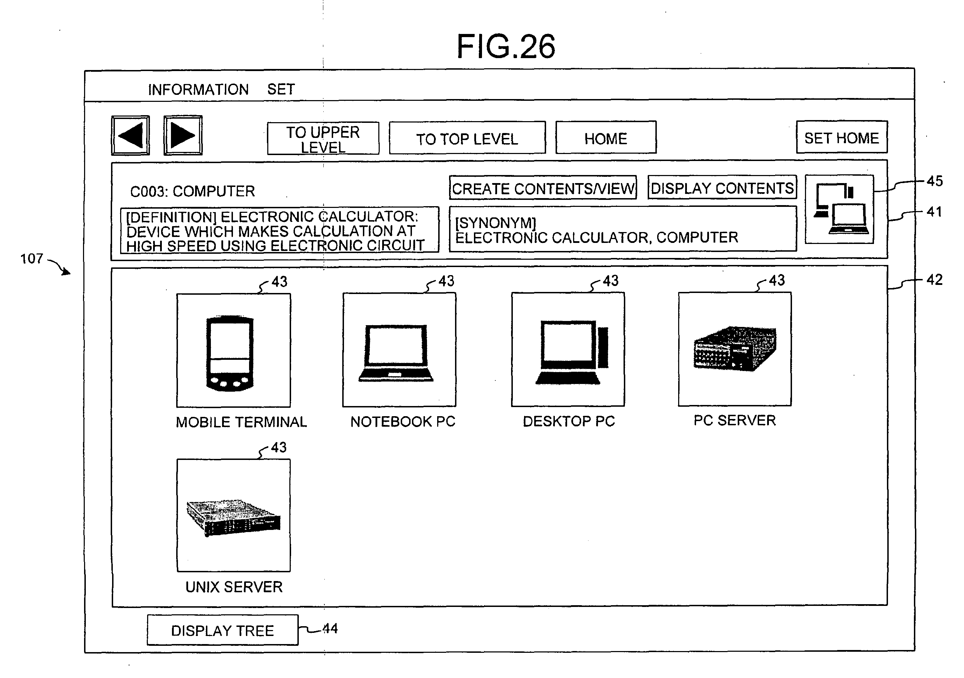

In this embodiment, the lower classes of a class, which is currently displayed on the palette, are represented by the icons for class selection 43. As shown in FIG. 26, however, an icon for class selection 45 of the currently displayed class on the palette may be displayed as class information.

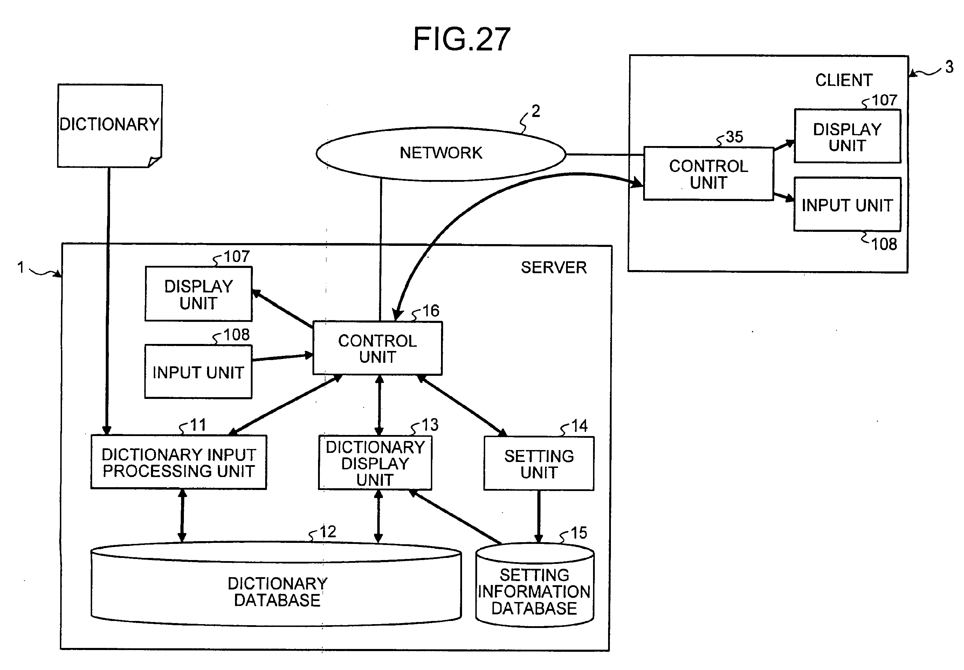

In this embodiment, some parts or all parts of the dictionary database 12 of the server 1 are saved in a local (dictionary database 31) in the client terminal 3, so that the processing speed is heightened. As shown in FIG. 27, however, the system may be such that some parts or all parts of the dictionary database 12 of the server 1 cannot be saved in a local (dictionary database 31) in the client terminal 3.

Additional advantages and modifications will readily occur to those skilled in the art. Therefore, the invention in its broader aspects is not limited to the specific details and representative embodiment shown and described herein. Accordingly, various modifications may be made without departing from the spirit or scope of the general inventive concept as defined by the appended claims and their equivalents.

## Claims

1. An information management system, comprising:
a input unit (11) configured to input a hierarchical dictionary (12) in which a property is inherited from an upper class to a lower class and in which symbols representing the classes are defined;
an creating unit (13) that creates a list of symbols representing lower classes of a predetermined class by obtaining the symbols from the hierarchical dictionary, when the predetermined class is selected; and
a display unit (35) that displays a list of the symbols.

2. The information management system according to claim 1, further comprising
a selecting unit (108) that selects a symbol from the list of the symbols; and
a display unit (35) that displays a list of manipulations for a class is represented by the selected symbol.

3. The information management system according to claim 1, further comprising
a selecting unit (108) that selects a symbol from the list of the symbols; and
a display unit (35) that displays a list of lower classes of a class is represented by the selected symbol.

4. The information management system according to claim 1, further comprising
a selecting unit (108) that selects a symbol from the list of the symbols; and
a display unit (35) that displays a list of reference classes of a class is represented by the selected symbol.

5. The information management system according to claim 1, further comprising
a message display unit (35) that explicitly displays a message on the palette to indicate that there is no lower class, when there is no lower class for the selected predetermined class.

6. The information management system according to claim 1, wherein symbols defined as representing upper classes are displayed on the palette on which the list of the symbols defined as representing the lower classes is displayed.

7. The information management system according to claim 1, further comprising
a symbol specifying unit (14;33) that specifies which symbol is to be displayed for each hierarchical dictionary or for each class, when plural symbols are defined as representing one class.

8. The information management system according to claim 1, further comprising
a symbol display unit (13) that displays a predetermined symbol to represent a class, when none of the symbols is defined as representing the class in the hierarchical dictionary.

9. The information management system according to claim 1, further comprising
a type mark adding unit (13;32) that adds a mark, which represents a type of the class, to the symbol on the palette so as to display the mark.

10. The information management system according to claim 1, further comprising
a reference mark adding unit (13; 32) that adds a mark, which represents that the class is referred to by another class, to the symbol on the palette so as to display the mark.

11. The information management system according to claim 1, further comprising
a registry mark adding unit (13; 32) that adds a mark, which represents that contents data are registered for the class, to the symbol on the palette so as to display the mark.

12. An information display device (3) comprising:
a input unit (11) configured to input a hierarchical dictionary (12) in which a property is inherited from an upper class to a lower class and in which symbols representing the classes are defined;
an creating unit (13) that creates a list of symbols representing lower classes of a predetermined class by obtaining the symbols from the hierarchical dictionary, when the predetermined class is selected; and
a display unit (35) that displays a list of the symbols.

13. The information display device (3) according to claim 12, wherein the hierarchical dictionary (12) received by the input unit (11) includes a part or all of a hierarchical dictionary (12), which exists in an information management device (1) connected to a network (2), and is updated only when the hierarchical dictionary (12) in the information management device (1) is changed.
